# EUROPEAN PATENT SPECIFICATION

(11) **EP 4 095 956 B1**
(45) Date of publication and mention of the grant of the patent: **12.02.2025**
(21) Application number: 21203261.9
(22) Date of filing: 18.10.2021
(51) Int. Cl.: H01M 8/0254, H01M 8/0258, H01M 8/0271

(54) **FUEL CELL AND FUEL CELL STACK**
BRENNSTOFFZELLE UND BRENNSTOFFZELLENSTAPEL
PILE À COMBUSTIBLE ET BLOC DE PILES À COMBUSTIBLE

(30) Priority: 27.05.2021 KR 20210068513
(43) Date of publication of application: 30.11.2022
(73) Proprietor: Hyundai Motor Company, Seoul 06797 (KR); Kia Corporation, Seocho-gu Seoul 06797 (KR)
(72) Inventor: KIM, Hyun Jeong, Yongin-si, Gyeonggi-do 16891 (KR); KIM, Bae Jung, Yongin-si, Gyeonggi-do 16891 (KR); KIM, Ah Reum, Yongin-si, Gyeonggi-do 16891 (KR); CHOI, Hyun Kyu, Yongin-si, Gyeonggi-do 16891 (KR); VAHC, Zuh Youn, Yongin-si, Gyeonggi-do 16891 (KR); KIM, Sun Hwi, Yongin-si, Gyeonggi-do 16891 (KR); KIM, Chan Gi, Yongin-si, Gyeonggi-do 16891 (KR)
(74) Representative: Viering, Jentschura & Partner mbB Patent- und Rechtsanwälte

(56) References cited:
- EP-A1- 2 348 567
- EP-A2- 1 009 051
- US-A1- 2005 100 775
- US-A1- 2018 226 663
- US-A1- 2019 067 712
- US-A1- 2019 363 371

## Description

### BACKGROUND

### 1. Field

The present disclosure relates to a fuel cell and a fuel cell stack, and more particularly, to a fuel cell and a fuel cell stack, which include a separator having ensured structural rigidity and improved safety and reliability.

### Discussion of Related Art

A fuel cell stack refers to a kind of power generation device that generates electrical energy through a chemical reaction of fuel (e.g., hydrogen), and the fuel cell stack may be configured by stacking several tens or hundreds of fuel cells (unit cells) in series.

The fuel cell may include a membrane electrode assembly (MEA) having an electrolyte membrane that may allow hydrogen positive ions to move therethrough, and electrodes (catalyst electrode layers) provided on two opposite surfaces of the electrolyte membrane to enable a reaction between hydrogen and oxygen. The fuel cell may also include gas diffusion layers (GDLs) disposed to be in close contact with two opposite surfaces of the membrane electrode assembly and configured to distribute reactant gases and transfer the generated electrical energy, and separators (bipolar plates) disposed to be in close contact with the gas diffusion layers and configured to define flow paths.

The separators may include an anode separator configured to supply hydrogen which is fuel, and a cathode separator configured to supply air which is an oxidant. The separator includes channels through which the fuel or the oxidant flows.

In addition, in order to configure the fuel cell stack by stacking the fuel cells, sealability needs to be maintained between the membrane electrode assembly and reaction surfaces of the separators and between cooling surfaces of the separators.

To this end, gaskets are disposed between the membrane electrode assembly and the reaction surfaces of the separators and the cooling surfaces of the separators. That is, the gaskets serve to prevent the reactant gases (e.g., hydrogen and air) flowing to the reaction surfaces of the separators from leaking to the outside of the fuel cell stack and to prevent the coolant flowing to the cooling surfaces of the separators from leaking to the outside of the fuel cell stack.

The gaskets may be integrated, by injection molding, with edge portions of two opposite surfaces of the separator and with edge portions of two opposite sides of each manifold for allowing the reactant gases and the coolant to flow in and out. The flow paths for the reactant gases and the coolant may be defined by the gaskets.

Meanwhile, flatness of the separator and a state sealed by the gasket need to be securely maintained to ensure stable performance of the fuel cell and safety and reliability of the fuel cell.

In the related art, however, there is a problem in that the separator is easily deformed or damaged when a fastening pressure (pressing force) is applied to the fuel cell. Further, there is also a problem in that the deformation of the separator degrades the flatness of the separator, which degrades performance of the fuel cell and causes deterioration in durability and sealability of the gasket.

In addition, a thickness of the gasket (e.g., a reaction surface gasket) needs to be minimized to minimize a compressibility deviation and a surface pressure deviation of the gasket. However, a decrease in thickness of the gasket to a certain degree or higher makes it difficult to ensure stable sealing performance. Therefore, there is a problem in that it is difficult to decrease the thickness of the gasket to a predetermined degree or higher.

Therefore, recently, various studies are conducted to minimize deformation of and damage to the separator and ensure durability and sealability of the gasket, but the study results are still insufficient. Accordingly, there is a need to develop a technology to minimize deformation of and damage to the separator and ensure durability and sealability of the gasket. US 2019/0067712 A1 discloses fuel cell with the features of the preamble of claim 1. A similar fuel cell is disclosed in US 2018 0 226663 A1 or EP 2 348 567 A1.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided a fuel cell including a membrane electrode assembly (MEA), a separator stacked on a surface of the membrane electrode assembly, a beading portion protruding from a first surface of the separator that faces the membrane electrode assembly, and a sealing member disposed between the membrane electrode assembly and the beading portion and being configured to seal a portion between the membrane electrode assembly and the separator.

The beading portion may be integrated with the separator by partially processing a part of the separator.

The fuel cell may include an edge beading portion disposed along an outermost peripheral edge of the separator.

The edge beading portion may be integrated with the separator by partially processing a part of the separator.

The beading portion may include a flat surface, and the sealing member may be disposed on the flat surface.

According to the invention, the separator includes a flow path part disposed on the first surface of the separator and configured to define a region in which a reactant gas reacts, a manifold part disposed in the separator and spaced apart from the flow path part, a junction channel disposed between the flow path part and the manifold part, a plurality of first distribution channels provided on a second surface of the separator and configured to connect the manifold part and the junction channel, to distribute the reactant gas introduced into the manifold part, and to supply the reactant gas to the junction channel, and a plurality of second distribution channels disposed on the first surface of the separator and configured to connect the junction channel and the flow path part, to distribute the reactant gas introduced into the junction channel, and to supply the reactant gas to the flow path part.

The fuel cell may include a gasket disposed on the second surface of the separator so as to correspond to the beading portion, wherein the first distribution channels may be disposed on the gasket.

The fuel cell may include a plurality of beading protrusions protruding from the first surface of the separator, wherein the second distribution channel may be defined between the adjacent beading protrusions.

The plurality of beading protrusion may be integrated with the separator by partially processing a part of the separator.

The fuel cell may include a channel sealing member disposed on the plurality of beading protrusion to seal a portion between the beading protrusion and the membrane electrode assembly.

In another general aspect, there is provided a fuel cell stack include a plurality of fuel cells according to claim 1, wherein the separator includes a flow path part provided on the first surface of the separator and configured to define a reaction region in which a reactant gas reacts, a manifold part disposed in the separator and spaced apart from the flow path part, a junction channel disposed between the flow path part and the manifold part, a plurality of first distribution channels disposed on a second surface of the separator and configured to connect the manifold part and the junction channel, to distribute the reactant gas introduced into the manifold part, and to supply the reactant gas to the junction channel, and a plurality of second distribution channels disposed the first surface of the separator and configured to connect the junction channel and the flow path part, to distribute the reactant gas introduced into the junction channel, and to supply the reactant gas to the flow path part.

Other features and aspects will be apparent from the following detailed description, the drawings, and the claims.

### BRIEF DESCRIPTION OF THE DRAWINGS

FIG. 1 is an exploded perspective view for explaining a fuel cell according to an embodiment of the present disclosure.
FIG. 2 is a cross-sectional view for explaining the fuel cell according to the embodiment of the present disclosure.
FIG. 3 is a view for explaining a separator of the fuel cell according to the embodiment of the present disclosure.
FIG. 4 is a view for explaining beading portions of the fuel cell according to the embodiment of the present disclosure.
FIG. 5 is a view for explaining a gasket of the fuel cell according to the embodiment of the present disclosure.
FIGS. 6 and 7 are views for explaining a first distribution channel and a second distribution channel of the fuel cell according to the embodiment of the present disclosure.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, and modifications of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for the purpose of describing particular examples only, and is not to be used to limit the disclosure. As used herein, the singular forms "a," "an," and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

Throughout the specification, when a component is described as being "connected to" or "coupled to" another component, it may be directly "connected to" or "coupled to" the other component, or there may be one or more other components intervening therebetween. In contrast, when an element is described as being "directly connected to" or "directly coupled to" another element, there can be no other elements intervening therebetween. Likewise, similar expressions, for example, "between" and "immediately between," and "adjacent to" and "immediately adjacent to," are also to be construed in the same way. As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in the examples described herein may also be referred to as a second member, component, region, layer, or section without departing from the teachings of the examples.

The use of the term "may" herein with respect to an example or embodiment (e.g., as to what an example or embodiment may include or implement) means that at least one example or embodiment exists where such a feature is included or implemented, while all examples are not limited thereto.

Also, in the description of example embodiments, detailed description of structures or functions that are thereby known after an understanding of the disclosure of the present application will be omitted when it is deemed that such description will cause ambiguous interpretation of the example embodiments. Hereinafter, examples will be described in detail with reference to the accompanying drawings, and like reference numerals in the drawings refer to like elements throughout.

In addition, the expression "one constituent element is provided or disposed above (on) or below (under) another constituent element" includes not only a case in which the two constituent elements are in direct contact with each other, but also a case in which one or more other constituent elements are provided or disposed between the two constituent elements. The expression "above (on) or below (under)" may mean a downward direction as well as an upward direction based on one constituent element.

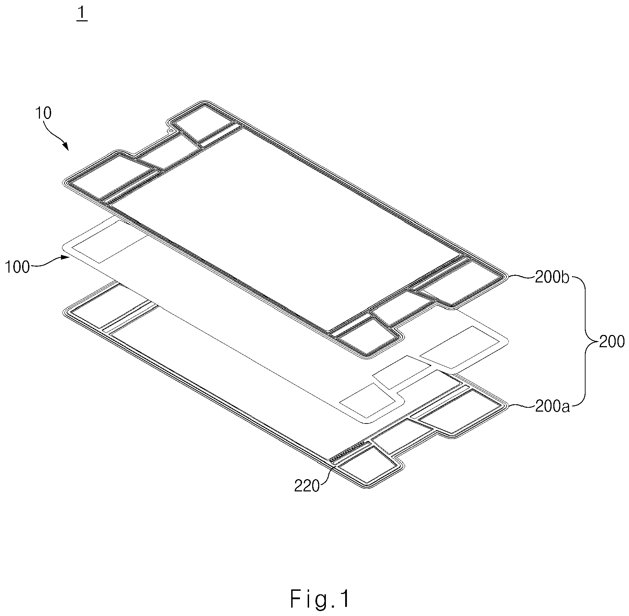

Referring to FIGS. 1 to 7, a fuel cell 10 includes a membrane electrode assembly (MEA) 100, separators 200 stacked on surfaces of the membrane electrode assembly 100, beading portions 210 each protruding from one surface of each of the separators 200 that faces the membrane electrode assembly 100, and sealing members 220 disposed between the membrane electrode assembly 100 and the beading portions 210 to seal portions between the membrane electrode assembly 100 and the separators 200.

For reference, the separators 200 in the embodiment of the present disclosure may be defined as including a first separator 200a (e.g., an anode separator) having flow paths for hydrogen as fuel, and a second separator 200b (e.g., a cathode separator) having flow paths for air as an oxidant.

Further, in the embodiment of the present disclosure, the first separator 200a and the second separator 200b may be made of thin-film metal (e.g., stainless steel, Inconel, or aluminum). The first separator 200a and the second separator 200b, together with the membrane electrode assembly 100, may constitute the single fuel cell (unit cell) 10 and independently define the flow paths for the hydrogen, air, and coolant.

That is, the fuel cell (unit cell) 10 may include the membrane electrode assembly 100, the first separator 200a stacked on one surface of the membrane electrode assembly 100, and the second separator 200b stacked on the other surface of the membrane electrode assembly 100. A fuel cell stack 1 may be configured by stacking a plurality of fuel cells 10 in a reference direction (e.g., an upward/downward direction) and then assembling endplates (not illustrated) with two opposite ends of the stack of the fuel cells 10.

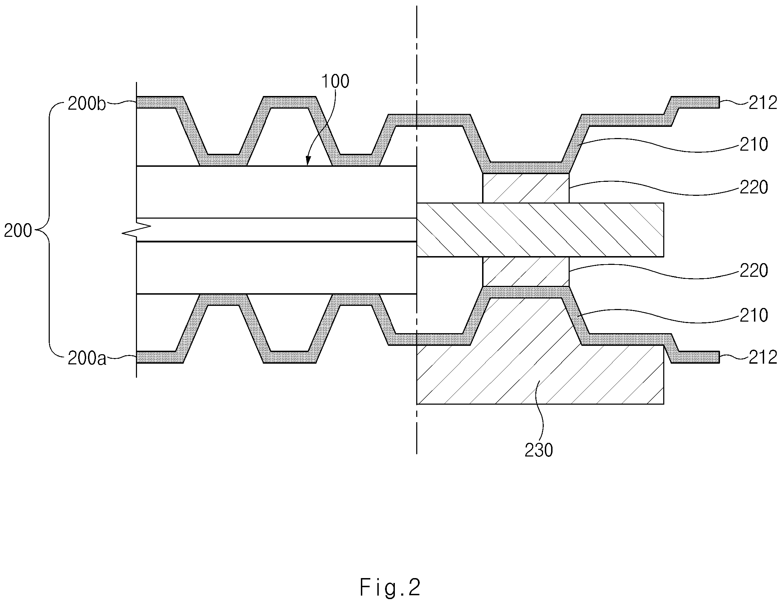

Referring to FIGS. 1 and 2, the membrane electrode assembly (MEA) 100 is configured to generate electricity through an oxidation-reduction reaction between fuel (e.g., hydrogen), which is a first reactant gas, and an oxidant (e.g., air) which is a second reactant gas.

The membrane electrode assembly 100 may be variously changed in structure and material in accordance with required conditions and design specifications, and the present disclosure is not limited or restricted by the structure and material of the membrane electrode assembly 100.

For example, the membrane electrode assembly 100 may include an electrolyte membrane through which hydrogen ions move, and catalyst electrode layers attached to two opposite sides of the electrolyte membrane. The electrochemical reactions occur in the catalyst electrode layers. In addition, gas diffusion layers (GDLs) (not illustrated) may be disposed at two opposite sides of the membrane electrode assembly 100. The gas diffusion layers serve to uniformly distribute the reactant gases and transfer generated electrical energy.

The hydrogen, which is the fuel, and the air, which is the oxidant, are supplied to an anode (not illustrated) and a cathode (not illustrated) of the membrane electrode assembly 100, respectively, through channels (not illustrated) in the first separator 200a and the second separator 200b. The hydrogen is supplied to the anode, and the air is supplied to the cathode.

The hydrogen supplied to the anode is decomposed into hydrogen ions (protons) and electrons by catalysts in the electrode layers disposed at two opposite sides of the electrolyte membrane. Only the hydrogen ions are selectively delivered to the cathode through the electrolyte membrane, which is a positive ion exchange membrane, and at the same time, the electrons are delivered to the cathode through the gas diffusion layer and the separator 200 which are conductors.

At the cathode, the hydrogen ions supplied through the electrolyte membrane and the electrons transmitted through the separator 200 meet oxygen in the air supplied to the cathode by an air supply device, thereby creating a reaction of producing water. As a result of the movement of the hydrogen ions, the electrons flow through external conductive wires, and the electric current is produced as a result of the flow of the electrons.

The separators 200 serve to supply the reactant gases (e.g., hydrogen and air) to the membrane electrode assembly 100 and are disposed to be in close contact with one side and the other side of the membrane electrode assembly 100 in the direction in which the fuel cells 10 are stacked.

For example, based on FIG. 1, the separators 200 (the first separator and the second separator) may be stacked on upper and lower surfaces of the membrane electrode assembly 100, respectively.

More specifically, the separator 200 is in close contact with one surface of the membrane electrode assembly 100. A flow path part 20, through which the reactant gas (hydrogen or air) flows, is disposed on one surface (an upper surface based on FIG. 1) of the first separator 200a that faces the membrane electrode assembly 100. A cooling channel (not illustrated), through which the coolant flows, is provided on the other surface (a lower surface based on FIG. 1) of the separator 200.

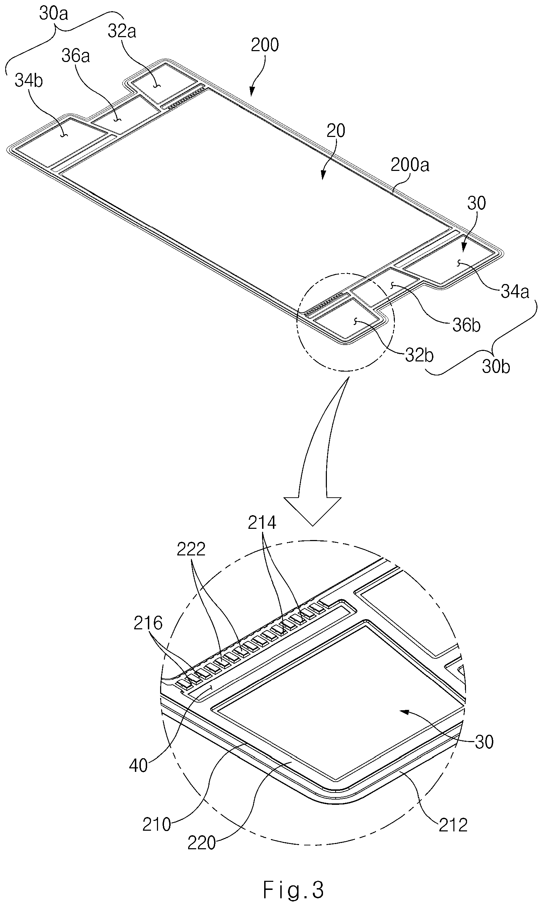

Referring to FIG. 3, the flow path part 20 is disposed at an approximately central portion of the separator 200 and faces one surface of the membrane electrode assembly 100 to define a reaction region. The flow path part 20 may include a plurality of flow paths (not illustrated) disposed to be spaced apart from one another. The present disclosure is not restricted or limited by the number of flow paths and the arrangement structure of the flow paths.

Manifold parts 30 (e.g., a hydrogen manifold, a coolant manifold, and an air manifold) are penetratively provided at two opposite ends of the separator 200 with the flow path part 20 interposed therebetween, and the manifold parts 30 serve to move (supply and discharge) the hydrogen, the air, and the coolant, respectively.

For example, a first manifold 30a may be disposed at one end (a left end based on FIG. 3) of the separator 200 so as to be spaced apart from one end of the flow path part 20. A second manifold 30b may be disposed at the other end (a right end based on FIG. 3) of the separator 200 so as to be spaced apart from the other end of the flow path part 20.

In particular, the gas (reactant gas) may be introduced into any one of the first manifold 30a and the second manifold 30b, and the gas may be discharged from the other of the first manifold 30a and the second manifold 30b.

For example, the first manifold 30a may include a hydrogen inlet manifold 32a through which the hydrogen is supplied, a coolant inlet manifold 36a through which the coolant is supplied, and an air outlet manifold 34b through which the air is discharged. In addition, the second manifold 30b may include a hydrogen outlet manifold 32b through which the hydrogen is discharged, a coolant outlet manifold 36b through which the coolant is discharged, and an air inlet manifold 34a through which the air is supplied.

The manifold part 30 may be variously changed in structure and shape in accordance with required conditions and design specifications. The present disclosure is not restricted or limited by the structure and shape of the manifold part 30.

For example, each of the hydrogen inlet manifold 32a, the coolant inlet manifold 36a, and the air outlet manifold 34b may be provided in the form of an approximately quadrangular hole penetratively provided at one end of the separator 200. Likewise, each of the hydrogen outlet manifold 32b, the coolant outlet manifold 36b, and the air inlet manifold 34a may be provided in the form of an approximately quadrangular hole penetratively provided at the other end of the separator 200.

The beading portion 210 protrudes from one surface (e.g., the upper surface of the first separator or the lower surface of the second separator based on FIG. 1) of the separator 200 that faces the membrane electrode assembly 100.

The beading portion 210 may have various structures in accordance with required conditions and design specifications, and the present disclosure is not restricted or limited by the structure and shape of the beading portion 210.

For example, the beading portion 210 may include a first beading portion (not illustrated) disposed along an edge of the separator 200, and a second beading portion (not illustrated) configured to surround the manifold part 30.

For example, the beading portion 210 may have a polygonal cross-sectional shape. Hereinafter, an example will be described in which the beading portion 210 has an approximately trapezoidal cross-sectional shape.

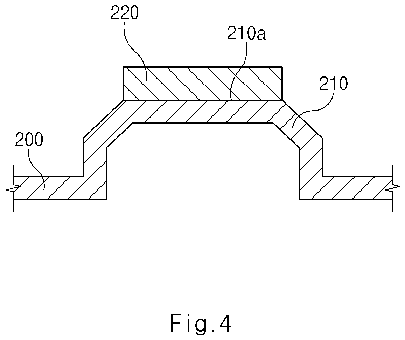

In particular, a flat surface 210a, which is parallel to the membrane electrode assembly 100, may be disposed at an uppermost end (based on FIG. 4) of the beading portion 210 that faces the membrane electrode assembly 100. The sealing member 220 may be disposed on the flat surface 210a.

Since the beading portion 210 includes the flat surface 210a and the sealing member 220 is disposed on the flat surface 210a as described above, it is possible to obtain an advantageous effect of minimizing a compressibility deviation and a surface pressure deviation of the sealing member 220.

According to another embodiment of the present disclosure, a seating portion (seating surface) of the beading portion on which the sealing member is seated may have a curved surface or other shapes instead of the flat surface.

In particular, the beading portion 210 is integrated with the separator 200 by partially processing (e.g., pressing) a part of the separator 200.

More particularly, the beading portion 210 may be formed together with lands and flow paths (through a single process) when the lands and the flow paths are formed by partially processing a part of the separator 200.

For example, the beading portion 210 may have an entirely uniform width (a width in the leftward/rightward direction based on FIG. 4).

The rigidity of the separator 200 may be increased by the beading portion 210 integrated with the separator 200 by processing a part of the separator 200 as described above. Therefore, it is possible to obtain an advantageous effect of minimizing deformation of and damage to the separator 200 when a fastening pressure (pressing force) is applied to the separator 200 and minimizing deterioration in flatness caused by the deformation of the separator 200.

In addition, since the rigidity of the separator 200 may be increased, it is possible to obtain an advantageous effect of making it easy to stack and fasten the separator 200 and improving safety and reliability of the separator 200.

According to another embodiment of the present disclosure, the beading portion may be separately manufactured and then attached (e.g., welded) to the separator. Alternatively, the beading portion may have different widths at different positions.

According to the exemplary embodiment of the present disclosure, the fuel cell 10 may include an edge beading portion 212 disposed along an outermost peripheral edge of the separator 200.

This is based on the fact that an outermost peripheral portion of the separator 200 is more frequently deformed due to contact and fastening force when the separator 200 is fastened. The edge beading portion 212 disposed along the outermost peripheral edge of the separator 200 may increase the rigidity of the outermost peripheral portion of the separator 200. Therefore, it is possible to obtain an advantageous effect of more effectively inhibiting deformation of and damage to the separator 200.

The edge beading portion 212 may have various structures in accordance with required conditions and design specifications, and the present disclosure is not restricted or limited by the structure of the edge beading portion 212.

For example, the edge beading portion 212 may be stepped and bent in a stepwise manner at an outermost peripheral end of the separator 200.

For reference, in the embodiment of the present disclosure illustrated and described above, the example is described in which the edge beading portion 212 is continuously disposed along the outermost peripheral edge of the separator 200. However, according to another embodiment of the present disclosure, edge beading portions may be disposed to be spaced apart from one another at predetermined intervals along the outermost peripheral edge of the separator.

The sealing members 220 are disposed between the membrane electrode assembly 100 and the beading portions 210 to seal the portions between the membrane electrode assembly 100 and the separators 200.

For reference, in the embodiment of the present disclosure, the configuration in which the sealing members 220 seal the portions between the membrane electrode assembly 100 and the separators 200 means that the sealing members 220 seal a portion between the membrane electrode assembly 100 and the first separator 200a and a portion between the membrane electrode assembly 100 and the second separator 200b, respectively.

For example, the sealing member 220 may include a first sealing portion (not illustrated) disposed along the first beading portion, and a second sealing portion (not illustrated) connected to the first sealing portion and disposed along the second beading portion.

In this case, the configuration in which the second sealing portion is disposed along the second beading portion may mean that the second sealing portion seals the hydrogen inlet manifold 32a, the coolant inlet manifold 36a, the air outlet manifold 34b, the hydrogen outlet manifold 32b, the coolant outlet manifold 36b, and the air inlet manifold 34a.

The sealing member 220 may be manufactured in various ways in accordance with required conditions and design specifications, and the present disclosure is not restricted or limited by the method of manufacturing the sealing member 220.

For example, the sealing member 220 may be manufactured by applying or transferring a sealant made of an elastic material such as rubber, silicone, or urethane onto the flat surface 210a of the beading portion 210 or performing a printing process on the flat surface 210a with the sealant.

In particular, the sealing member 220 may have adhesiveness, and the state in which the sealing member 220 and the membrane electrode assembly 100 are in contact with each other may be maintained (fixed) by adhesiveness of the sealing member 220.

According to another embodiment of the present disclosure, the sealing member may be attached to the separator by injection molding. Alternatively, the sealing member may be manufactured (by injection molding, for example) separately from the separator and then attached (bonded) to the separator.

Since the sealing member 220 is disposed on the beading portion 210 protruding from the separator 200 in the embodiment of the present disclosure as described above, a thickness of the sealing member 220 may be reduced to the extent of a height of the beading portion 210 (i.e., a height at which the beading portion 210 protrudes from the separator 200). Therefore, it is possible to obtain an advantageous effect of minimizing a compressibility deviation and a surface pressure deviation of the sealing member 220 and stably ensuring durability and sealability of a gasket 230.

Among other things, since the sealing member 220 having a small, uniform thickness is disposed on the flat portion of the beading portion 210 in the embodiment of the present disclosure, an entirely uniform surface pressure may be applied to the sealing member 220 when a fastening pressure (pressing force) is applied to the fuel cell 10. Therefore, it is possible to obtain an advantageous effect of minimizing excessive compression and deformation (e.g., distortion) of the sealing member 220 and improving durability and sealability of the sealing member 220.

As illustrated and described above, the separator 200 includes the flow path part 20 disposed on one surface of the separator 200 and configured to define the reaction region in which the reactant gas reacts, and the manifold parts 30 disposed on the separator 200 and spaced apart from the flow path part 20. The reactant gases (e.g., hydrogen and air) may be supplied to the flow path part 20 through the manifold parts 30.

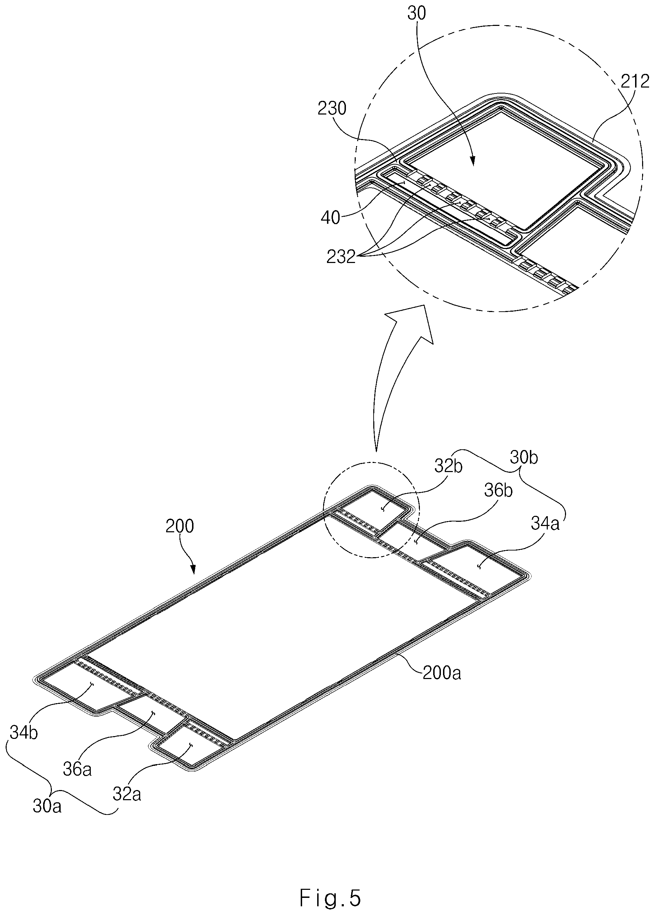

Referring to FIGS. 5 to 7, according to the exemplary embodiment of the present disclosure, the separator 200 includes a junction channel 40 disposed between the flow path part 20 and the manifold part 30, a plurality of first distribution channels 232 disposed on the other surface of the separator 200 and configured to connect the manifold part 30 and the junction channel 40, distribute the reactant gas introduced into the manifold part 30, and supply the reactant gas to the junction channel 40, and a plurality of second distribution channels 216 disposed on one surface of the separator 200 and configured to connect the junction channel 40 and the flow path part 20, distribute the reactant gas introduced into the junction channel 40, and supply the reactant gas to the flow path part 20.

This is to minimize a flow rate deviation of the reactant gas to be supplied to each of the flow paths of the flow path part 20 and more uniformly distribute the reactant gas to each of the flow paths of the flow path part 20.

That is, the reactant gas supplied to the manifold part 30 may be supplied to the flow path part 20 by sequentially passing through the first distribution channels 232, the junction channel 40, and the second distribution channels 216. As described above, the reactant gas supplied to the manifold part 30 may be primarily distributed by the first distribution channels 232, and the reactant gas supplied to the junction channel 40 may be secondarily distributed again by the second distribution channels 216. Therefore, it is possible to obtain an advantageous effect of minimizing a flow rate deviation of the reactant gas to be supplied to the flow paths of the flow path part 20 and more uniformly distributing the reactant gas to the flow paths of the flow path part 20.

In other words, the reactant gas introduced into the manifold part 30 may be uniformly supplied (distributed) over the entire section of the junction channel 40 (the entire section in a longitudinal direction of the junction channel 40) through the first distribution channels 232, and the reactant gas introduced into the junction channel 40 may be distributed (supplied) again to the flow path part 20 through the second distribution channel 216, which makes it possible to minimize a flow rate deviation of the reactant gas to be supplied to the flow paths of the flow path part 20. Therefore, it is possible to obtain an advantageous effect of stably and uniformly ensuring the output performance of the fuel cell 10.

More specifically, the junction channel 40 is disposed between the manifold part 30 and the flow path part 20 and spaced apart from the manifold part 30 and the flow path part 20, the first distribution channels 232 connect the manifold part 30 and the junction channel 40, and the second distribution channels 216 connect the junction channel 40 and the flow path part 20.

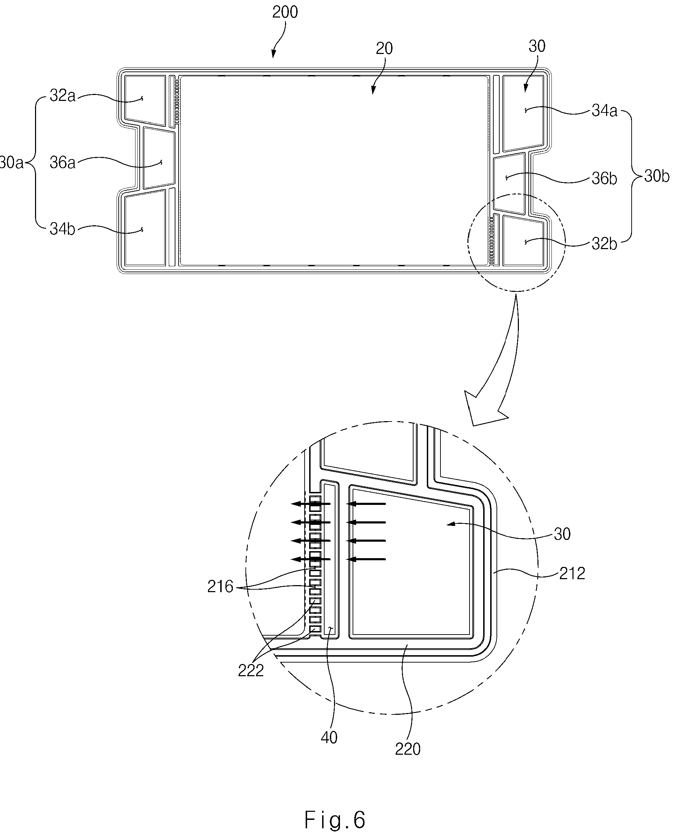

The junction channel 40 may have various structures in accordance with required conditions and design specifications. For example, the junction channel 40 may be provided in the form of an approximately quadrangular hole having a length (a length in the upward/downward direction based on FIG. 6) corresponding to the manifold part 30.

The plurality of first distribution channels 232 is disposed to be spaced apart from one another at predetermined intervals in the longitudinal direction of the junction channel 40. One end of each of the first distribution channels 232 communicates with the manifold part 30, and the other end of each of the first distribution channels 232 communicates with the junction channel 40.

In this case, the first distribution channel 232 may be variously changed in number, width, and spacing interval in accordance with required conditions and design specifications. The present disclosure is not restricted or limited by the number of first distribution channels 232, the width of the first distribution channel 232, and the spacing interval between the first distribution channels 232.

The first distribution channel 232 may be provided in various ways in accordance with required conditions and design specifications.

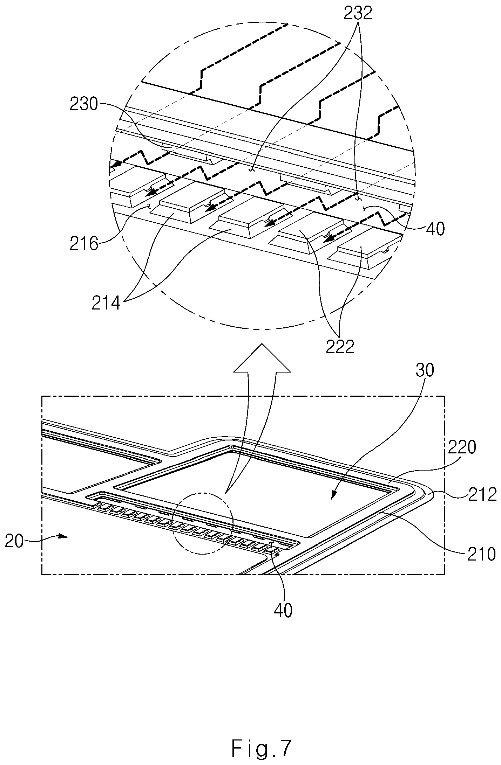

According to the exemplary embodiment of the present disclosure, the fuel cell 10 may include the gasket 230 disposed on the other surface (the upper surface based on FIG. 5 or the lower surface based on FIG. 7) of the separator 200 so as to correspond to the beading portion 210. The first distribution channels 232 may be disposed in the gasket 230.

The gasket 230 serves to maintain an interval between the separators 200 that overlap each other. The gasket 230 seals a cooling channel (not illustrated) disposed on the other surface of the separator 200. The gasket 230 may be made of an elastic material such as rubber, silicone, or urethane.

In particular, an internal space (recessed space) defined by the beading portion 210 may be filled with the gasket 230, which makes it possible to inhibit a leakage of the coolant that flows along the cooling channel.

For example, the gasket 230 may be integrated with the separator 200 by injection molding, and the first distribution channels 232 may be disposed in the gasket 230 at the time of forming the gasket 230.

According to another embodiment of the present disclosure, the gasket may be manufactured (by injection molding, for example) separately from the separator and then attached (bonded) to the separator.

In the embodiment of the present disclosure illustrated and described above, the example has been described in which the first distribution channels 232 are disposed in the gasket 230. However, according to another embodiment of the present disclosure, the first distribution channels may be disposed directly on the other surface of the separator, or the first distribution channels may be disposed on another member disposed on the other surface of the separator.

The plurality of second distribution channels 216 is disposed to be spaced apart from one another at predetermined intervals in the longitudinal direction of the junction channel 40. One end of each of the second distribution channels 216 communicates with the junction channel 40, and the other end of each of the second distribution channels 216 communicates with the flow path part 20.

In this case, the second distribution channel 216 may be variously changed in number, width, and spacing interval in accordance with required conditions and design specifications. The present disclosure is not restricted or limited by the number of second distribution channels 216, the width of the second distribution channel 216, and the spacing interval between the second distribution channels 216.

The second distribution channel 216 may be manufactured in various ways in accordance with required conditions and design specifications.

According to the exemplary embodiment of the present disclosure, the fuel cell 10 may include a plurality of beading protrusions 214 protruding from one surface (the upper surface based on FIG. 3) of the separator 200, and the second distribution channel 216 may be defined between the adjacent beading protrusions 214.

For example, the beading protrusions 214 may be integrated with the separator 200 by partially processing (e.g., pressing) a part of the separator 200.

In particular, the beading protrusions 214 may be formed together with the beading portion 210 (through a single process) when the beading portion 210 is formed by partially processing a part of the separator 200. Since the beading portion 210 and the beading protrusions 214 are formed together at the time of forming the separator 200 as described above, it is possible to obtain an advantageous effect of simplifying a structure and a manufacturing process and reducing costs.

According to another embodiment of the present disclosure, the beading protrusion may be separately manufactured and then attached (e.g., welded) to the separator.

More particularly, the fuel cell 10 may include channel sealing members 222 disposed on the beading protrusions 214, respectively, to seal portions between the beading protrusions 214 and the membrane electrode assembly 100.

The channel sealing members 222 are disposed between the beading protrusions 214 and the membrane electrode assembly 100 and serve to seal a portion between the adjacent second distribution channels 216.

The channel sealing member 222 may be manufactured in various ways in accordance with required conditions and design specifications, and the present disclosure is not restricted or limited by the method of manufacturing the channel sealing member 222.

For example, the channel sealing member 222 may be manufactured by applying or transferring a sealant made of an elastic material such as rubber, silicone, or urethane onto an uppermost end (based on FIG. 7) of the beading protrusion 214 or performing a printing process on the uppermost end of the beading protrusion 214 with the sealant. In particular, the channel sealing member 222 may be manufactured together with the sealing member 220 at the time of forming the sealing member 220 on the flat surface 210a of the beading portion 210 so that the channel sealing member 222 has the same thickness as the sealing member 220.

According to another embodiment of the present disclosure, the channel sealing member may be provided on the separator by injection molding. Alternatively, the channel sealing member may be manufactured (by injection molding, for example) separated from the separator and then attached (bonded) to the separator.

According to the present disclosure as described above, it is possible to obtain an advantageous effect of ensuring structural rigidity and improving safety and reliability of the separator.

Particularly, according to the present disclosure, it is possible to obtain an advantageous effect of stably maintaining flatness of the separator and minimizing deformation of and damage to the separator.

Further, according to the present disclosure, it is possible to obtain an advantageous effect of minimizing a leakage of the reactant gas and the coolant and improving stability and reliability of the fuel cell.

According to the present disclosure, it is possible to obtain an advantageous effect of minimizing a thickness of the sealing member and minimizing a compressibility deviation and a surface pressure deviation of the sealing member.

In addition, according to the present disclosure, it is possible to obtain an advantageous effect of minimizing a distribution deviation (flow rate deviation) of the reactant gas and ensuring the stable output performance of the fuel cell.

The present disclosure has been made in an effort to provide a fuel cell and a fuel cell stack, which include a separator having ensured structural rigidity and improved safety and reliability.

The present disclosure has also been made in an effort to stably maintain flatness of a separator and minimize deformation of and damage to the separator.

The present disclosure has also been made in an effort to minimize leakages of a coolant and reactant gases and improve stability and reliability of the fuel cell.

The present disclosure has also been made in an effort to minimize a thickness of a sealing member and minimize a compressibility deviation and a surface pressure deviation of the sealing member.

The present disclosure has also been made in an effort to minimize a distribution deviation (flow rate deviation) of reactant gases and ensure stable output performance of the fuel cell.

The objects to be achieved by the embodiments are not limited to the above-mentioned objects, but also include objects or effects that may be understood from the solutions or embodiments described below.

The embodiment of the present disclosure ensures structural rigidity and improve safety and reliability of the separator.

That is, in the related art, there is a problem in that the separator is easily deformed or damaged when a fastening pressure (pressing force) is applied to the fuel cell. Further, there is also a problem in that the deformation of the separator degrades the flatness of the separator, which degrades performance of the fuel cell and causes deterioration in durability and sealability of the gasket.

In addition, a thickness of the gasket (e.g., a reaction surface gasket) needs to be minimized to minimize a compressibility deviation and a surface pressure deviation of the gasket. However, a decrease in thickness of the gasket to a certain degree or higher makes it difficult to ensure stable sealing performance. Therefore, there is a problem in that it is difficult to decrease the thickness of the gasket to a predetermined degree or higher.

However, according to the embodiment of the present disclosure, the beading portion may be disposed on the separator, and the sealing member may be disposed on the beading portion. Therefore, it is possible to obtain an advantageous effect of ensuring structural rigidity of the separator and ensuring durability and sealing performance of the sealing member.

Moreover, according to the embodiment of the present disclosure, the sealing member may be disposed on the beading portion protruding from the separator, which makes it possible to further reduce a thickness of the sealing member. Therefore, it is possible to obtain an advantageous effect of minimize a compressibility deviation and a surface pressure deviation of the sealing member and stably ensuring durability and sealability of the gasket.

According to the exemplary embodiment of the present disclosure, the beading portion may be integrated with the separator by partially processing a part of the separator.

The rigidity of the separator may be increased by the beading portion integrated with the separator by processing a part of the separator as described above. Therefore, it is possible to obtain an advantageous effect of minimizing deformation of and damage to the separator when a fastening pressure (pressing force) is applied to the separator and minimizing deterioration in flatness caused by the deformation of the separator.

In addition, since the rigidity of the separator may be increased, it is possible to obtain an advantageous effect of making it easy to stack and fasten the separator and improving safety and reliability of the separator.

According to the exemplary embodiment of the present disclosure, the fuel cell may include an edge beading portion disposed along an outermost peripheral edge of the separator.

This is based on the fact that an outermost peripheral portion of the separator is more frequently deformed due to contact and fastening force when the separator is fastened. The edge beading portion disposed along the outermost peripheral edge of the separator may increase the rigidity of the outermost peripheral portion of the separator. Therefore, it is possible to obtain an advantageous effect of more effectively inhibiting deformation of and damage to the separator.

According to the exemplary embodiment of the present disclosure, the beading portion may include a flat surface, and the sealing member may be disposed on the flat surface.

Since the beading portion includes the flat surface and the sealing member is disposed on the flat surface as described above, it is possible to obtain an advantageous effect of minimizing a compressibility deviation and a surface pressure deviation of the sealing member.

According to the exemplary embodiment of the present disclosure, the separator includes:
a flow path part disposed on one surface of the separator and configured to define a reaction region in which a reactant gas reacts; a manifold part disposed in the separator and spaced apart from the flow path part; a junction channel disposed between the flow path part and the manifold part; a plurality of first distribution channels disposed on the other surface of the separator and configured to connect the manifold part and the junction channel, distribute the reactant gas introduced into the manifold part, and supply the reactant gas to the junction channel; and a plurality of second distribution channels disposed on one surface of the separator and configured to connect the junction channel and the flow path part, distribute the reactant gas introduced into the junction channel, and supply the reactant gas to the flow path part.

This is to minimize a flow rate deviation of the reactant gas to be supplied to each of the flow paths of the flow path part and more uniformly distribute the reactant gas to each of the flow paths of the flow path part.

That is, the reactant gas supplied to the manifold part may be supplied to the flow path part by sequentially passing through the first distribution channels, the junction channel, and the second distribution channels. As described above, the reactant gas supplied to the manifold part may be primarily distributed by the first distribution channels, and the reactant gas supplied to the junction channel may be secondarily distributed again by the second distribution channels. Therefore, it is possible to obtain an advantageous effect of minimizing a flow rate deviation of the reactant gas to be supplied to the flow paths of the flow path part and more uniformly distributing the reactant gas to the flow paths of the flow path part.

In other words, the reactant gas introduced into the manifold part may be uniformly supplied (distributed) over the entire section of the junction channel (the entire section in a longitudinal direction of the junction channel) through the first distribution channels, and the reactant gas introduced into the junction channel may be distributed (supplied) again to the flow path part through the second distribution channel, which makes it possible to minimize a flow rate deviation of the reactant gas to be supplied to the flow paths of the flow path part. Therefore, it is possible to obtain an advantageous effect of stably and uniformly ensuring the output performance of the fuel cell.

While this disclosure includes specific examples, it will be apparent after an understanding of the disclosure of this application that various changes in form and details may be made in these examples, within the scope of the appended claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components

Therefore, the scope of the disclosure is defined not by the detailed description, but by the claims.

## Claims

1. A fuel cell (10) comprising:
a membrane electrode assembly (MEA, 100);
a separator (200) stacked on a surface of the membrane electrode assembly (100);
a beading portion (210) protruding from a first surface of the separator (200) that faces the membrane electrode assembly; and
a sealing member (220) disposed between the membrane electrode assembly (100) and the beading portion (210) and being configured to seal a portion between the membrane electrode assembly (100) and the separator (200),
**characterized in that**
the separator comprises:
a flow path part (20) disposed on the first surface of the separator (200) and configured to define a region in which a reactant gas reacts;
a manifold part (30) disposed in the separator (200) and spaced apart from the flow path part (20);
a junction channel (40) disposed between the flow path part (20) and the manifold part (30);
a plurality of first distribution channels (232) provided on a second surface of the separator (200) and configured to connect the manifold part (30) and the junction channel (40), to distribute the reactant gas introduced into the manifold part (30), and to supply the reactant gas to the junction channel (40); and
a plurality of second distribution channels (216) disposed on the first surface of the separator (200) and configured to connect the junction channel (40) and the flow path part (20), to distribute the reactant gas introduced into the junction channel (40), and to supply the reactant gas to the flow path part (20).

2. The fuel cell of claim 1, wherein the beading portion (210) is integrated with the separator (200) by partially processing a part of the separator (200).

3. The fuel cell of claim 1, comprising:
an edge beading portion (212) disposed along an outermost peripheral edge of the separator (200).

4. The fuel cell of claim 3, wherein the edge beading portion (212) is integrated with the separator (200) by partially processing a part of the separator (200).

5. The fuel cell of claim 1, wherein the beading portion (210) comprises a flat surface (210a), and the sealing member (220) is disposed on the flat surface (210a).

6. The fuel cell of claim 1, comprising:
a gasket (230) disposed on the second surface of the separator (200) so as to correspond to the beading portion (210),
wherein the first distribution channels (232) are disposed on the gasket.

7. The fuel cell of claim 1, comprising:
a plurality of beading protrusions (214) protruding from the first surface of the separator (200),
wherein the second distribution channel (216) is defined between the adjacent beading protrusions (214).

8. The fuel cell of claim 7, wherein the plurality of beading protrusion (214) is integrated with the separator (200) by partially processing a part of the separator (200).

9. The fuel cell of claim 7, comprising:
a channel sealing member (222) disposed on the plurality of beading protrusion (214) to seal a portion between the beading protrusion (214) and the membrane electrode assembly (100).

10. A fuel cell stack (1) comprising a plurality of fuel cells (10) according to claim 1.

## Patentansprüche

1. Brennstoffzelle (10), welche aufweist:
eine Membran-Elektrode-Baugruppe (MEA, 100);
einen Separator (200), welcher auf einer Fläche der Membran-Elektrode-Baugruppe (100) gestapelt ist;
einen Sicke-Abschnitt (210), welcher von einer ersten Fläche des Separators (200) her vorsteht, welche der Membran-Elektroden-Baugruppe zugewandt ist; und
ein Dichtungselement (220), welches zwischen der Membran-Elektrode-Baugruppe (100) und dem Sicke-Abschnitt (210) angeordnet ist und welches eingerichtet ist, um einen Abschnitt zwischen der Membran-Elektrode-Baugruppe (100) und dem Separator (200) abzudichten,
**dadurch gekennzeichnet, dass**
der Separator aufweist:
einen Strömungspfadteil (20), welcher an der ersten Fläche des Separators (200) angeordnet ist und welcher eingerichtet ist, um einen Bereich zu definieren, in welchem ein Reaktionsgas reagiert;
einen Sammelleitungsteil (30), welcher in dem Separator (200) angeordnet ist und welcher im Abstand von dem Strömungspfadteil (20) angeordnet ist;
einen Zusammenflusskanal (40), welcher zwischen dem Strömungspfadteil (20) und dem Sammelleitungsteil (30) angeordnet ist;
eine Mehrzahl von ersten Verteilungskanälen (232), welche an einer zweiten Fläche des Separators (200) bereitgestellt sind und welche eingerichtet sind, um den Sammelleitungsteil (30) und den Zusammenflusskanal (40) zu verbinden, um das in den Sammelleitungsteil (30) hinein eingebrachte Reaktionsgas zu verteilen und um das Reaktionsgas dem Zusammenflusskanal (40) zuzuführen; und
eine Mehrzahl von zweiten Verteilungskanälen (216), welche an der ersten Fläche des Separators (200) angeordnet sind und welche eingerichtet sind, um den Zusammenflusskanal (40) und den Strömungspfadteil (20) zu verbinden, um das in den Zusammenflusskanal (40) hinein eingebrachte Reaktionsgas zu verteilen und um das Reaktionsgas dem Strömungspfadteil (20) zuzuführen.

2. Brennstoffzelle gemäß Anspruch 1, wobei der Sicke-Abschnitt (210) mit dem Separator (200) durch teilweisen Verarbeiten eines Teiles des Separators (200) integriert ist.

3. Brennstoffzelle gemäß Anspruch 1, welche aufweist:
einen Rand-Sicke-Abschnitt (212), welcher entlang eines äußersten Umfangsrandes des Separators (200) angeordnet ist.

4. Brennstoffzelle gemäß Anspruch 3, wobei der Rand-Sicke-Abschnitt (212) mit dem Separator (200) durch teilweisen Verarbeiten eines Teiles des Separators (200) integriert ist.

5. Brennstoffzelle gemäß Anspruch 1, wobei der Sicke-Abschnitt (210) eine ebene Fläche (210a) aufweist und das Dichtungselement (220) an der ebenen Fläche (210a) angeordnet ist.

6. Brennstoffzelle gemäß Anspruch 1, welche aufweist:
eine Dichtung (230), welche an der zweiten Fläche des Separators (200) angeordnet ist, um mit dem Sicke-Abschnitt (210) zu korrespondieren,
wobei die ersten Verteilungskanäle (232) an der Dichtung angeordnet sind.

7. Brennstoffzelle gemäß Anspruch 1, welche aufweist:
eine Mehrzahl von Sicke-Vorsprüngen (214), welche von der ersten Fläche des Separators (200) her vorstehen,
wobei der zweite Verteilungskanal (216) zwischen den aneinandergrenzenden Sicke-Vorsprüngen (214) definiert ist.

8. Brennstoffzelle gemäß Anspruch 7, wobei die Mehrzahl von Sicke-Vorsprüngen (214) mit dem Separator (200) durch teilweises Verarbeiten eines Teils des Separators (200) integriert ist.

9. Brennstoffzelle gemäß Anspruch 7, welche aufweist:
ein Kanalabdichtungselement (222), welches an der Mehrzahl von Sicke-Vorsprüngen (214) angeordnet ist, um einen Abschnitt zwischen dem Sicke-Vorsprung (214) und der Membran-Elektrode-Baugruppe (100) abzudichten.

10. Brennstoffzellenstapel (1), welcher eine Mehrzahl von Brennstoffzellen (10) gemäß Anspruch 1 aufweist.

## Revendications

1. Pile à combustible (10), comprenant :
un assemblage membrane-électrode (MEA, 100) ;
un séparateur (200) empilé sur une surface de l'assemblage membrane-électrode (100) ;
une partie de bourrelet (210) faisant saillie d'une première surface du séparateur (200) qui fait face à l'assemblage membrane-électrode ; et
un élément d'étanchéité (220) disposé entre l'assemblage membrane-électrode (100) et la partie de bourrelet (210) et configuré pour sceller une partie entre l'assemblage membrane-électrode (100) et le séparateur (200),
**caractérisé en ce que**
le séparateur comprend :
une partie de voie d'écoulement (20) disposée sur la première surface du séparateur (200) et configurée pour définir une région dans laquelle un gaz réactif réagit ;
une partie de collecteur (30) disposée dans le séparateur (200) et espacée de la partie de voie d'écoulement (20) ;
un canal de jonction (40) disposé entre la partie de voie d'écoulement (20) et la partie de collecteur (30) ;
une pluralité de premiers canaux de distribution (232) prévus sur une deuxième surface du séparateur (200) et configurés pour relier la partie de collecteur (30) et le canal de jonction (40), pour distribuer le gaz réactif introduit dans la partie de collecteur (30), et pour fournir le gaz réactif au canal de jonction (40) ; et
une pluralité de deuxièmes canaux de distribution (216) disposés sur la première surface du séparateur (200) et configurés pour relier le canal de jonction (40) et la partie de voie d'écoulement (20), pour distribuer le gaz réactif introduit dans le canal de jonction (40), et pour fournir le gaz réactif à la partie de voie d'écoulement (20).

2. Pile à combustible selon la revendication 1, dans laquelle la partie de bourrelet (210) est intégrée au séparateur (200) par traitement partiel d'une partie du séparateur (200).

3. Pile à combustible selon la revendication 1, comprenant :
une partie de bourrelet de bord (212) disposée le long d'un bord périphérique le plus extérieur du séparateur (200).

4. Pile à combustible selon la revendication 3, dans laquelle la partie de bourrelet de bord (212) est intégrée au séparateur (200) par traitement partiel d'une partie du séparateur (200).

5. Pile à combustible selon la revendication 1, dans laquelle la partie de bourrelet (210) comprend une surface plate (210a), et l'élément d'étanchéité (220) est disposé sur la surface plate (210a).

6. Pile à combustible selon la revendication 1, comprenant :
un joint d'étanchéité (230) disposé sur la deuxième surface du séparateur (200) de manière à correspondre à la partie de bourrelet (210),
dans laquelle les premiers canaux de distribution (232) sont disposés sur le joint d'étanchéité.

7. Pile à combustible selon la revendication 1, comprenant :
une pluralité de saillies de bourrelet (214) faisant saillie de la première surface du séparateur (200),
dans laquelle le deuxième canal de distribution (216) est défini entre les saillies de bourrelet adjacentes (214).

8. Pile à combustible selon la revendication 7, dans laquelle la pluralité de saillies de bourrelet (214) est intégrée au séparateur (200) par traitement partiel d'une partie du séparateur (200).

9. Pile à combustible selon la revendication 7, comprenant :
un élément d'étanchéité de canal (222) disposé sur la pluralité de saillies de bourrelet (214) pour sceller une partie entre la saillie de bourrelet (214) et l'assemblage membrane-électrode (100).

10. Empilement de piles à combustible (1) comprenant une pluralité de piles à combustible (10) selon la revendication 1.
